# NEUE EUROPÄISCHE PATENTSCHRIFT

(11) **EP 3 490 128 B2**
(45) Veröffentlichungstag und Bekanntmachung des Hinweises auf die Entscheidung über den Einspruch: **01.01.2025**
(45) Hinweis auf die Patenterteilung: 20.11.2019
(21) Anmeldenummer: 17203986.9
(22) Anmeldetag: 28.11.2017
(51) Int. Cl.: H02M 1/32, H02M 5/458, H02P 1/00, H02P 3/22

(54) **ELEKTRONISCHE SCHUTZSCHALTUNG**
ELECTRONIC PROTECTION CIRCUIT
CIRCUIT PROTECTION ÉLECTRONIQUE

(43) Veröffentlichungstag der Anmeldung: 29.05.2019
(73) Patentinhaber: KEB Automation KG, 32683 Barntrup (DE)
(72) Erfinder: Korthals, Hans-Peter, 32699 Extertal (DE); Hertel, Willi, 32657 Lemgo (DE); Hovestadt, Winfried, 32694 Dörentrup (DE); Gellermann, Thomas, 31749 Auetal (DE)
(74) Vertreter: Brinkmann & Partner

(56) Entgegenhaltungen:
- EP-A1- 2 736 159
- DE-A1- 102016 005 986
- DE-A1- 102016 206 053

## Beschreibung

Die Erfindung betrifft eine elektronische Schutzschaltung für einen in Reihe mit einem Bremstransistor geschalteten Bremswiderstand eines Zwischenkreises, wobei der Bremstransistor in Abhängigkeit einer am Zwischenkreis anliegenden Spannung mittels eines Ansteuersignals schaltbar ist. Desweiteren betrifft die Erfindung einen Frequenzumrichter zum Betreiben einer elektrischen Maschine, mit einem Gleichrichter und einem Wechselrichter, die miteinander über einen Zwischenkreis verschaltet sind, wobei der Zwischenkreis einen Bremswiderstand und einen damit in Reihe geschalteten Bremstransistor aufweist.

Umrichter im Allgemeinen sowie Frequenzumrichter im Speziellen sind aus dem Stand der Technik an sich gut bekannt, weshalb es eines gesonderten druckschriftlichen Nachweises an dieser Stelle nicht bedarf. Es sei deshalb auch nur beispielhaft auf die EP 2 680 421 B1 verwiesen, die einen Frequenzumrichter mit Zwischenkreiskondensator sowie ein Verfahren zum Vorladen desselben betrifft.

Frequenzumrichter verfügen typischerweise über einen Gleichrichter und einen Wechselrichter, die mittels eines Zwischenkreises miteinander verschaltet sind. Gemäß einer vorbekannten Bauform verfügt der Zwischenkreis über zwei in Reihe geschaltete Zwischenkreiskondensatoreinheiten. Dabei können je Zwischenkreiskondensatoreinheit mehrere in Reihe und/oder parallel geschaltete Zwischenkreiskondensatoren vorgesehen sein.

Es ist aus dem Stand der Technik ferner bekannt, Frequenzumrichter mit einem Bremstransistor, auch Bremschopper genannt, auszurüsten, um unzulässig hohe Spannungen im Zwischenkreis zu verhindern, die während eines Bremsbetriebs einer an den Frequenzumrichter angeschlossenen elektrischen Maschine, insbesondere eines Motors auftreten können.

So wird während eines Bremsbetriebs einer an den Frequenzumrichter angeschlossenen elektrischen Maschine Energie zurück in den Zwischenkreis des Frequenzumrichters gespeist, was zu einem Anstieg der am Zwischenkreis anliegenden Spannung führt. Sollte nun die Zwischenkreisspannung einen frequenzumrichterspezifischen Wert übersteigen, so besteht die Gefahr einer Schädigung des Frequenzumrichters, einschließlich der von einer solchen Geräteschädigung ausgehenden Gefahr für Personen und/oder Objekte, die sich in unmittelbarer Nähe zum geschädigten Gerät befinden.

Um der vorstehenden Problematik zu begegnen, ist der Einsatz sogenannter Bremstransistoren bekannt, die in Reihe mit einem Bremswiderstand geschaltet sind. Ein solcher Bremstransistor schaltet mit Erreichen eines vorgebbaren Wertes für die Zwischenkreisspannung den parallel zum Zwischenkreis geschalteten Bremswiderstand zu, so dass es zu einem Stromfluss durch den Bremswiderstand und den Bremstransistor kommt. Der Bremswiderstand wandelt einen Teil der gespeicherten Energie im Zwischenkreis in Wärme um, womit die am Zwischenkreis anliegende Spannung sinkt, womit ein unerwünschter Überlastfall des Zwischenkreises vermieden ist.

Sobald der Bremsbetrieb der an den Frequenzumrichter angeschlossenen elektrischen Maschine beendet ist, sinkt die am Zwischenkreis anliegende Spannung unterhalb des vorgebbaren Vergleichswerts. Infolgedessen kommt es zu einer Sperrung des Bremstransistors, womit der Bremswiderstand stromlos gestellt wird.

Aus dem Stand der Technik ist gemäß der EP 2 736 159 A1 des Weiteren ein Umrichtersystem sowie eine Wind- oder Wasserenergieanlage mit einem solchen Umrichtersystem bekannt. Dabei verfügt das Umrichtersystem über einen Gleichrichter und mindestens zwei Wechselrichter, wobei der Gleichrichter von einer Wechselstromquelle mit Energie versorgt ist. Zur Energieversorgung der Wechselrichter ist der Gleichrichter mit jedem der Wechselrichter über einen gemeinsamen Gleichstromkreis verbunden und jeder Wechselrichter ist jeweils mit einem elektrischen Verbraucher zur Energieversorgung des jeweiligen Verbrauchers verbindbar. In wenigstens einer der Verbindungen zwischen dem Gleichstromkreis und einem der Wechselrichter ist eine Entkopplungseinrichtung angeordnet, wobei die Entkopplungseinrichtung verhindert, dass elektrische Energie ausgehend von dem Wechselrichter in Richtung des Gleichstromkreises übertragen wird.

Aus der DE 10 2016 005 986 A1 ist ferner ein Umrichter bekannt, der einen AC/DC-Wandler und einen DC/ACWandler aufweist. Der AC/DC-Wandler verfügt über einen gleichspannungsseitigen Anschluss, zu dem parallel eine Reihenschaltung aus einem Bremswiderstand und einem steuerbaren Schalter angeordnet ist. Der Umrichter verfügt des Weiteren über ein Spannungserfassungsmittel und eine Ansteuereinheit. Die Ansteuereinheit weist ihrerseits ein Vergleichsmittel auf, welches ein von der Ansteuereinheit erzeugtes Ansteuersignal auf unzulässige Abweichungen überwacht.

Obgleich sich die Ausrüstung eines Frequenzumrichters mit einem Bremswiderstand und einem hierzu in Reihe geschalteten Bremstransistor im alltäglichen Praxiseinsatz bewährt hat, besteht Verbesserungsbedarf. Denn Bremstransistoren können aus Gründen der Alterung, Überlastung und/oder anderer Fehler einen Defekt aufweisen, der zu einem Kurzschluss im Bremstransistor führt. In einem solchen Kurzschlussfall wird der Bremswiderstand dauerhaft parallel zum Zwischenkreis geschlossen, was einen dauerhaften Stromfluss durch den Bremswiderstand zur Folge hat. Für eine solche dauerhafte Belastung ist der Bremswiderstand aber nicht ausgelegt, so dass es zu einer Zerstörung desselben kommt. Infolge einer solchen Widerstandszerstörung kann es zu Flammen- und Funkenbildungen kommen, was Personen- und Sachschäden nach sich ziehen kann. Dies gilt es zu vermeiden, weshalb es die **Aufgabe** der Erfindung ist, eine elektronische Schutzschaltung vorzuschlagen, die einen insoweit verbesserten Personen- und Sachschutz bereitstellt.

Zur **Lösung** dieser Aufgabe wird mit der Erfindung vorgeschlagen eine elektronische Schutzschaltung mit den Merkmalen nach Anspruch 1.

Die erfindungsgemäße Schutzschaltung sorgt dafür, dass es im Defektfall des Bremstransistors zu einer sofortigen Unterbrechung des Stromflusses in den Zwischenkreis kommt. Einer Zerstörung des Bremswiderstandes wird so wirksam entgegengewirkt, womit ein effektiver Personen- und Sachschutz realisiert ist.

Die elektronische Schutzschaltung verfügt über eine Messeinrichtung. Mittels dieser Messeinrichtung wird die am Bremstransistor anliegende Kollektor-Emitter-Spannung erfasst. Dabei gibt die Kollektor-Emitter-Spannung an, wie hoch der Spannungsabfall zwischen Kollektor und Emitter des Bremstransitors ist. Solange der Transistor vollständig gesperrt ist, fällt die volle Betriebsspannung an der Kollektor-Emitter-Strecke ab. Ist der Bremstransistor hingegen voll durchgesteuert, so fällt nur ein kleiner Teil der Betriebsspannung an der Kollektor-Emitter-Strecke ab. Es lässt sich mithin durch Messung der am Bremstransistor anliegenden Kollektor-Emitter-Spannung ermitteln, ob der Transistor gesperrt und damit der in Reihe zum Bremstransistor geschaltete Bremswiderstand stromlos gestellt ist oder ob eine entsprechende Spannung am Transistor und damit auch am Bremswiderstand anliegt.

Die elektronische Schutzschaltung verfügt zu diesem Zweck über eine erste Vergleichseinrichtung, die das Messsignal der Messeinrichtung mit einem vorgebbaren Vergleichswert vergleicht. Dabei ist der Vergleichswert derart ausgelegt, dass bei einem sperrenden Bremstransistor die anliegende Kollektor-Emitter-Spannung oberhalb des Vergleichswertes liegt. Ist der Transistor dagegen durchgesteuert, das heißt leitend, so liegt die am Bremstransistor anliegende Kollektor-Emitter-Spannung unterhalb des vorgebbaren Vergleichswerts.

In ihrer Kombination ermöglichen es die Messeinrichtung und die erster Vergleichsschaltung mithin, festzustellen, in welchem tatsächlichen Zustand sich der Bremstransistor befindet, ob dieser also sperrend oder leitend ist. Dieser so ermittelte Zustand des Bremstransistors kann als Ist-Zustand bezeichnet werden.

Die Ansteuerung des Bremstransistors erfolgt über ein Ansteuersignal. Dieses wird in Abhängigkeit der am Zwischenkreis anliegenden Spannung geschaltet. Befindet sich die an den Frequenzumrichter angeschlossene elektrische Maschine im Bremsbetrieb, so steigt die am Zwischenkreis anliegende Spannung. Wird ein bestimmter Vergleichswert überschritten, so wird zum Schutz des Zwischenkreises der Bremstransistor mittels des Ansteuersignals angesteuert.

Die erfindungsgemäße elektronische Schutzschaltung verfügt über eine zweite Vergleichseinrichtung. Diese zweite Vergleichseinrichtung dient dazu, das Vergleichssignal der ersten Vergleichseinrichtung mit dem Ansteuersignal für den Bremstransistor zu vergleichen. Dabei gibt das Ansteuersignal den Soll-Zustand des Bremstransistors wieder, ob dieser also in Abhängigkeit der am Zwischenkreis anliegenden Spannung sperrend oder leitend geschaltet sein sollte.

Ergibt sich infolge des durch die zweite Vergleichseinrichtung vorgenommenen Signalvergleichs, dass das Vergleichssignal und das Ansteuersignal übereinstimmen, so ist dies gleichbedeutend damit, dass der erfasste Ist-Zustand des Bremstransistors und der Soll-Zustand des Bremstransistors einander entsprechen. Ergibt dieser Vergleich indes eine Ungleichheit zwischen Vergleichssignal und Ansteuersignal, so ist dies gleichbedeutend damit, dass der Bremstransistor einen Defekt aufweist, beispielsweise infolge eines Kurzschlusses. In diesem Fall gibt die Vergleichseinheit ein entsprechendes Steuersignal ab.

Die erfindungsgemäße Schutzschaltung verfügt desweiteren über eine Abschalteinrichtung. Diese Abschaltvorrichtung steht in kommunikationstechnischer Verbindung mit der zweiten Vergleichsschaltung und dient dazu, bei Detektion eines entsprechenden Steuersignals der zweiten Vergleichseinrichtung eine sofortige Abschaltung des Stromflusses in den Zwischenkreis zu bewerkstelligen. Damit wird vermieden, dass ein Betrieb des Frequenzumrichters bei defektem Bremstransistor fortgeführt wird, womit der Bremswiderstand und somit auch der Frequenzumrichter vor weiterem Schaden geschützt sind. Damit ist auch ein effektiver Personen- und Sachschutz gegeben.

Insgesamt ist so mit der Erfindung eine einfach zu realisierende Schutzschaltung geschaffen, die in effektiver Weise einem Personen- und Sachschutz dient, da sie im Defektfall des Bremstransistors einen Stromfluss in den Zwischenkreis unterbricht, was eine Zerstörung des Bremswiderstands verhindert. Dabei sind schaltungstechnisch zwei Vergleichseinrichtungen vorgesehen. Mittels der ersten Vergleichseinrichtung wird der Ist-Zustand des Bremstransistors festgestellt. Dabei kann der Bremstransistor bestimmungsgemäß entweder sperrend oder leitend sein, je nachdem, ob ein Bremsbetrieb der an den Frequenzumrichter angeschlossenen elektrischen Maschine vorliegt oder nicht. Dieser erfasste Ist-Zustand wird mit dem Soll-Zustand des Bremstransistors verglichen. Stimmen der Soll-Zustand und der Ist-Zustand des Bremstransistors nicht überein, so lässt dies den Rückschluss darauf zu, dass der Bremstransistor defekt ist. Die erfindungsgemäße vorgesehene Schutzschaltung sorgt deshalb in diesem Fall dafür, dass es zu einer sofortigen Abschaltung des Stromflusses in den Zwischenkreis kommt.

Da die Stromabschaltung erfindungsgemäß auf der Netzseite erfolgt, wird im Kurzschlussfall des Bremstransistors ein Wechselstrom abgeschaltet, was technisch vergleichsweise einfach realisierbar ist. Aus dem Stand der Technik vorbekannte Lösungen sehen Sicherungen im Bremstransistorpfad vor. Diese Lösung bedarf nicht nur zusätzlicher Bauteile, sie ist auch aufwendig und teuer, da an dieser Stelle ein Gleichstrom fließt.

Verfahrensseitig wird mit der Erfindung desweiteren vorgeschlagen ein Verfahren mit den Merkmalen nach Anspruch 8.

Die erfindungsgemäße Verfahrensdurchführung erbringt die schon vorstehend anhand der erfindungsgemäßen Schutzschaltung erläuterten Vorteile.

Vorrichtungsseitig wird gemäß einem weiteren Merkmal der Erfindung vorgeschlagen, dass die erste Vergleichseinrichtung einen Optokoppler aufweist. Im bestimmungsgemäßen Betriebsfall wird der Optokoppler in Abhängigkeit des von der ersten Vergleichseinrichtung festgestellten Vergleichsergebnisses angesteuert. Der Optokoppler wird mithin je nach Ergebnis des Spannungsvergleichs strombeaufschlagt, was ausgangsseitig des Optokopplers zu einer entsprechenden Signalabgabe führt. Das Optokopplerausgangssignal dient der zweiten Vergleichseinrichtung als Vergleichssignal.

Im Ergebnis dieser Schaltung ist erreicht, dass im bestimmungsgemäßen Verwendungsfall ein Strom durch die Diode des Optokopplers fließt, der ein Schalten des

Optokopplerausgangs zur Folge hat. Dabei steht der Optokopplerausgang in kommunikationstechnischer Verbindung mit der zweiten Vergleichseinrichtung, so dass mittels dieser feststellbar ist, in welchem tatsächlichen Ist-Zustand sich der Bremstransistor befindet.

Von besonderem Vorteil dieser Ausgestaltung ist die einfache Signalvermittlung an die zweite Vergleichseinrichtung. Es können selbstredend aber auch andere elektronische Bauteile zur Signalweiterleitung an die zweite Vergleichseinrichtung genutzt werden, auch solche, die unter Umständen eine eigene Spannungsversorgung erforderlich machen.

Die Abschaltvorrichtung der erfindungsgemäßen Schutzschaltung weist erfindungsgemäß einen Gleichrichter und eine Vorladeschaltung für den Zwischenkreis auf. Dabei ist der Gleichrichter dem Zwischenkreis vorgeschaltet und verfügt bevorzugterweise über Thyristoren als Gleichrichterhalbleiter. Die Vorladeschaltung ist parallel zu einem Thyristor an einer der Phasen geschaltet und weist erfindungsgemäß eine Diode und einen hierzu in Reihe geschalteten, temperaturabhängigen Widerstand auf.

Im bestimmungsgemäßen Anwendungsfall führt der Energiefluss vom Versorgungsnetz über den Gleichrichter in den Zwischenkreis und von dort aus zu weiteren Verbrauchern. Die Thyristoren des Gleichrichters sind in diesem Fall angesteuert, um den Energiefluss über die Gleichrichterschaltung in den Zwischenkreis zu ermöglichen.

Parallel zu einem Thyristor, der an einer der Phasen des Versorgungsnetzes angeschlossen ist, ist der Vorladezweig der Vorladeschaltung geschaltet. Dabei übernehmen die Diode und der hierzu in Reihe geschaltete Widerstand der Vorladeschaltung bei einer Einschaltung die Spannungsvorladung des Zwischenkreises. Bei hinreichender Spannungshöhe im Zwischenkreis werden die Thyristoren eingeschaltet. Dabei ist es Sinn und Zweck der Vorladeschaltung, größere Ströme im Versorgungsnetz beim Einschalten zu verhindern.

Wird nun in vorbeschriebener Weise festgestellt, dass am Bremstransistor ein Defekt infolge beispielsweise eines Kurzschlusses vorliegt, so erfolgt eine Abschaltung der Thyristoren des zur Abschaltvorrichtung gehörenden Gleichrichters. Die Abschaltvorrichtung verfügt zu diesem Zweck über eine Thyristoransteuerung, das heißt über Mittel zur Deaktivierung eines die Thyristoren ansteuerenden Signals. Sobald die drei an die jeweiligen Phasen angeschlossenen Thyristoren gesperrt sind, ist der Stromfluss über den Gleichrichter an den Zwischenkreis unterbunden. Es stellt sich dann ein Stromfluss über die Vorladeschaltung, das heißt über die Diode und den hierzu in Reihe geschalteten Widerstand der Vorladeschaltung ein.

Bei dem Widerstand der Vorladeschaltung handelt es sich um einen temperaturabhängigen Widerstand, der mit zunehmend werdendem Stromfluss hochohmig wird, was im vorbeschriebenen Fehlerfall des Kurzschlusses des Bremstransistors der Fall ist. Sobald der Widerstand infolge eines hohen Stromflusses hochohmig geworden ist, ist der Zwischenkreis vom Versorgungsnetz getrennt. Es kann somit kein Energiefluss sowohl über die Thyristoren als auch über die Vorladeschaltung in den Zwischenkreis erfolgen, womit auch ein weiterer Stromfluss durch den Bremswiderstand unterbunden und dieser mithin vor einer Zerstörung geschützt ist. Der temperaturabhängige Widerstand der Vorladeschaltung ist mithin so auszulegen, dass eine Stromflussunterbrechung in den Zwischenkreis stattfindet, bevor es zu einer Zerstörung des Bremswiderstandes kommen kann.

Von besonderem Vorteil der vorbeschriebenen Abschaltvorrichtung ist, dass sie die ohnehin für eine bestimmungsgemäße Vorladung des Zwischenkreises vorgesehene Vorladeschaltung nutzt, um im Fehlerfall, das heißt im Falle eines Kurzschlusses des Bremstransistors eine sofortige Trennung des Zwischenkreises vom Versorgungsnetz zu bewerkstelligen. Damit kommt der Vorladeschaltung im Fehlerfall eine Schutzfunktion zu. Dabei ist in diesem Zusammenhang ferner von Vorteil, dass der temperaturabhängige Widerstand der Vorladeschaltung im hochohmigen Zustand ein erneutes, unbeabsichtigtes Einschalten bei einem bestehenden Fehlerfall verhindert, was zusätzliche Sicherheit für den Anwender schafft.

Verfahrensseitig wird in diesem Zusammenhang ein Verfahren vorgeschlagen, bei dem erfindungsgemäß der Strom über Thyristoren in den Zwischenkreis fließt, wobei der Stromfluss in den Zwischenkreis durch Sperrung der Thyristoren unterbunden wird. Ferner wird erfindungsgemäß vorgeschlagen, dass der Strom bei gesperrten Thyristoren über eine Vorladeschaltung mit temperaturabhängigem Widerstand in den Zwischenkreis fließt, wobei der Stromfluss in den Zwischenkreis infolge des Hochohmigwerdens des temperaturabhängigen Widerstands unterbunden wird.

Aus dieser Verfahrensdurchführung ergeben sich die schon anhand der erfindungsgemäßen Schutzschaltung erläuterten Vorteile.

Gemäß einem weiteren Merkmal der Erfindung und für sich genommen selbst schutzfähig wird mit der Erfindung desweiteren vorgeschlagen ein Frequenzumrichter zum Betreiben einer elektrischen Maschine, mit einem Gleichrichter und einem Wechselrichter, die miteinander über einen Zwischenkreis verschaltet sind, wobei der Zwischenkreis einen Bremswiderstand und einen damit in Reihe geschalteten Bremstransistor aufweist, wobei sich ein solcher Frequenzumrichter auszeichnet durch eine elektrische Sicherheitsschaltung, wie sie vorstehend beschrieben ist.

Die erfindungsgemäße Schutzschaltung eignet sich insbesondere zur Verwendung in einem Frequenzumrichter. Dabei können der ohnehin vorgesehene Gleichrichter des Frequenzumrichters und die ebenfalls ohnehin vorgesehene Vorladeschaltung des Frequenzumrichters als Schaltungskomponenten der erfindungsgemäß vorgesehenen Abschaltvorrichtung genutzt werden. Dies macht die erfindungsgemäße Ausgestaltung besonders einfach und betriebswirtschaftlich in der Umsetzung, und dies bei gleichzeitig verbessertem Personen- und Sachschutz. Denn die erfindungsgemäß vorgesehene Schaltung stellt im Fehlerfall, das heißt insbesondere im Kurzschlussfall des Bremstransistors eine sofortige Trennung des Zwischenkreises vom Versorgungsnetz sicher. Eine Zerstörung des Bremswiderstands und damit auch des Frequenzumrichters kann so wirkungsvoll verhindert werden.

Weitere Merkmale und Vorteile der Erfindung ergeben sich aus der Beschreibung anhand der Figuren. Dabei zeigen:
Fig. 1 ein Blockschaltbild eines Frequenzumrichters nach der Erfindung, das heißt mit einer Schutzschaltung nach der Erfindung und
Fig. 2 eine prinzipielle Gleichrichterschaltung.

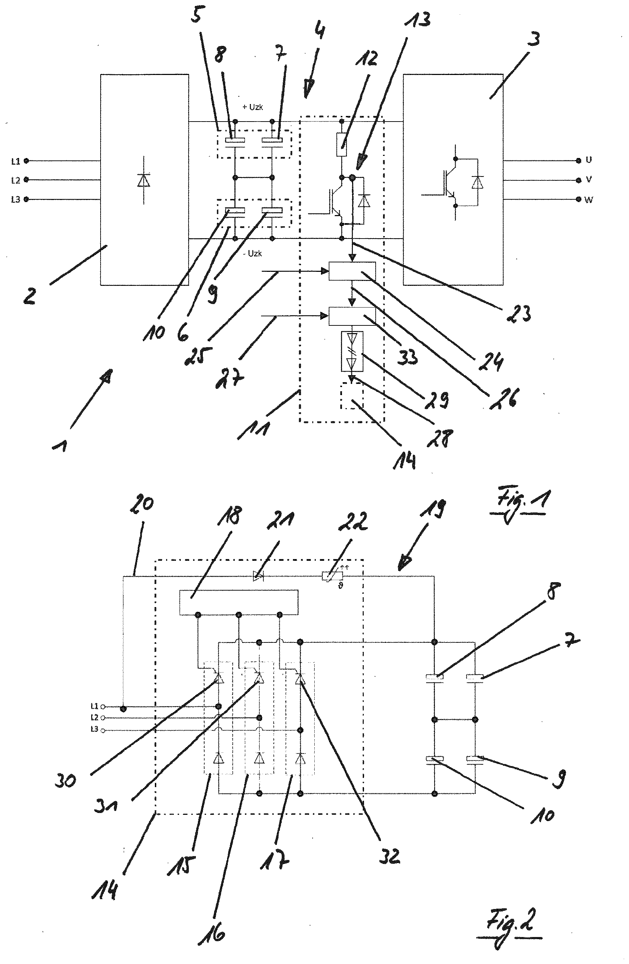

Fig. 1 lässt in einem Blockschaltbild einen Frequenzumrichter 1 erkennen. Dieser dient zum Betreiben einer in den Figuren nicht näher dargestellten elektrischen Maschine, beispielsweise eines Motors, und verfügt in an sich bekannter Weise über einen Gleichrichter 2 und einen Wechselrichter 3. Dabei sind der Gleichrichter 2 und der Wechselrichter 3 miteinander über einen Zwischenkreis 4 verschaltet.

Wie Fig. 1 desweiteren kennen lässt, ist der Frequenzumrichter 1 stromeingangsseitig an die Phasen L1, L2 und L3 eines Versorgungsnetzes angeschlossen.

Der Zwischenkreis 4 des Frequenzumrichters 1 verfügt über zwei Zwischenkreiskondensatoreinheiten 5 und 6, die in Reihe geschaltet sind. Dabei verfügt im gezeigten Ausführungsbeispiel jede Zwischenkreiskondensatoreinheit 5 bzw. 6 über zwei parallel geschaltete Kondensatoren 7 und 8 beziehungsweise 9 und 10. Im Ergebnis sind zwei Kondensatorpfade gegeben, wobei die Kondensatoren 7 und 9 sowie die Kondensatoren 8 und 10 jeweils in Reihe geschaltet sind.

Der Zwischenkreis 4 verfügt desweiteren über einen Bremswiderstand 12 sowie über einen damit in Reihe geschalteten Bremstransistor 13, auch Bremschopper genannt. Dabei sind der Bremswiderstand 12 und der Bremstransistor 13 zu den Zwischenkreiskondensatoreinheiten 5 und 6 parallel geschaltet.

Der Bremswiderstand 12 dient dazu, im Bremsfall einer an den Frequenzumrichter 1 angeschlossenen elektrischen Maschine dafür Sorge zu tragen, dass die infolge eines Stromrückflusses am Zwischenkreis 4 anliegende Spannung nicht über einen vorgebbaren Grenzwert hinaus ansteigt. Zu diesem Zweck schaltet der Bremstransistor 13 bei einem zuvor festgelegten Wert der Zwischenkreisspannung auf leitend um, womit es zu einem Stromfluss durch den Bremswiderstand 12 und den Bremstransistor 13 kommt. Der Bremswiderstand 12 wandelt einen Teil der gespeicherten Energie in Wärme um, womit die am Zwischenkreis 4 anliegende Spannung sinkt. Im Nicht-Bremsfall der an den Frequenzumrichter 1 angeschlossenen elektrischen Maschine ist der Bremstransistor 13 auf sperrend gestellt, so dass der in Reihe hierzu geschaltete Bremswiderstand 12 stromlos gestellt ist.

Die Ansteuerung des Bremstransistors 13 erfolgt mittels eines entsprechenden Ansteuersignals, und zwar in Entsprechung der vorstehenden Erläuterungen in Abhängigkeit der am Zwischenkreis 4 anliegenden Spannung.

Kommt es im Defektfall, beispielsweise infolge eines Kurzschlusses zu einem Ausfall des Bremstransistors 13, so wird der Bremswiderstand 12 dauerhaft parallel an den Zwischenkreis 4 angeschlossen. Für eine solche Dauerbelastung ist der Bremswiderstand 12 aber nicht ausgelegt, so dass es zu einer Zerstörung desselben kommt, gegebenenfalls auch unter Feuer- und/oder Funkenbildung.

Die erfindungsgemäß vorgesehene Schutzschaltung 11 verhindert eine solche ungewollte Zerstörung des Bremswiderstands 12 infolge eines Defekts des Bremstransistors 13.

Die Schutzschaltung 11 verfügt über eine Messeinrichtung. Diese dient der Erfassung der am Bremstransistor 13 anliegenden Kollektor-Emitter-Spannung. Die Messeinrichtung gibt ein entsprechendes Messsignal 23 ab, und zwar an eine erste Vergleichseinrichtung 24.

Die erste Vergleichseinrichtung 24 vergleicht das Messsignal 23 der Messeinrichtung mit einem vorgebbaren Vergleichswert 25. Dabei ist der Vergleichswert 25 bevorzugterweise derart vorgegeben, dass bei einem sperrenden Bremstransistor 13 die Kollektor-Emitter-Spannung oberhalb des Vergleichswertes liegt. Bei einem leitenden Bremstransistor 13 ist die Kollektor-Emitter-Spannung indes unterhalb des vorgebbaren Vergleichswerts.

Je nach Ergebnis des Spannungsvergleichs wird ein Vergleichssignal 26 beispielsweise mittels eines Optokopplers an eine zweite Vergleichseinrichtung 33 übergeben. Diese zweite Vergleichseinrichtung 33 vergleicht das Vergleichssignal 26 mit dem Ansteuersignal 27 für den Bremstransistor 13. Im normalen Betriebsfall stimmen das Ansteuersignal 27 und das Vergleichssignal 26 überein, denn dann entspricht der Soll-Zustand dem Ist-Zustand.

Wird von der Vergleichseinrichtung 33 indes Ungleichheit zwischen dem Vergleichssignal 26 und dem Ansteuersignal 27 festgestellt, so ist die gleichbedeutend damit, dass der Bremstransistor 13 defekt ist. In diesem Fall gibt die Vergleichseinrichtung 33 mittels einer Signalverarbeitung 29 ein entsprechendes Steuersignal 28 an eine Abschaltvorrichtung 14.

Die Abschaltvorrichtung ist im Detail in Fig. 2 dargestellt. Diese umfasst den schon vorbeschriebenen Gleichrichter 2, eine Thyristorenansteuerung 18 sowie eine Vorladeschaltung 19.

Der Gleichrichter 2 verfügt über drei Thyristoren 30, 31 und 32, die jeweils Teil einer Thyristoreinheit 15, 16 und 17 sind, die an die Phase des Versorgungsnetzes angeschlossen sind. Dabei ist ein erster Thyristor 30 der Phase L1, ein zweiter Thyristor 31 der Phase L2 und ein dritter Thyristor 32 der Phase L3 zugeordnet.

Wie sich ebenfalls aus der Darstellung nach Fig. 2 ergibt, ist die Vorladeschaltung 19 parallel zum ersten Thyristor 30 an Phase L1 des Versorgungsnetzes angeschlossen. Alternativ könnte die Vorladeschaltung 19 auch parallel zu einer der beiden anderen Phasen geschaltet sein. Jedenfalls besteht die Vorladeschaltung 19 aus einer Reihenschaltung aus einer Diode 21 und einem temperaturabhängigen Widerstand 22, der bei hohen Temperaturen hochohmig wird. Anstelle nur eines Widerstandes können auch mehrere in Reihe und/oder parallel geschaltete Widerstände vorgesehen sein.

Die Funktionsweise der erfindungsgemäßen Schutzschaltung 11 ist die folgende: Im bestimmungsgemäßen Betriebsfall sind die Thyristoren 30, 31 und 32 über die Thyristoransteuerung 18 angesteuert, was einen Energie-, das heißt Stromfluss vom Versorgungsnetz über den Gleichrichter 2 in den Zwischenkreis 4 gestattet. Dabei haben bei voller Ansteuerung der Thyristoren 30, 31 und 32 die Diode 21 und der Widerstand 22 der Vorladeschaltung 19 eine vernachlässigbare Wirkung, da die Vorladeschaltung 24 parallel zum ersten Thyristor 30 an L1 anliegt.

Die Vorladeschaltung 19 übernimmt beim Einschalten des Frequenzumrichters 1 die Spannungs-Vorladung des Zwischenkreises 4. Erst bei hinreichender Spannungshöhe im Zwischenkreis 4 werden mittels der Thyristoransteuerung 18 die Thyristoren 30, 31 und 32 eingeschaltet. Durch eine solche Vorladung werden große Ströme im Versorgungsnetz beim Einschalten des Frequenzumrichters 1 verhindert.

Sollte es nun zu einem Kurzschluss im Bremstransistor 13 kommen, so ergibt sich ein zum Soll-Zustand des Bremstransistors 13 unterscheidbarer Ist-Zustand des Bremstransistors 13. Denn das von der ersten Vergleichseinrichtung 24 gelieferte Vergleichssignal 26 stimmt mit dem Ansteuersignal 27 nicht überein, in welchem Fall die zweite Vergleichseinrichtung 33 ein entsprechendes Steuersignal 28 abgibt, was an die Abschaltvorrichtung 14 weitergeleitet wird. Die Abschaltvorrichtung 14 deaktiviert daraufhin den Gleichrichter 2, um weiteren Energiefluss in den Frequenzumrichter 1 zu verhindern. Es kann dabei in vorteilhafter Weise auf eine Steuerung verzichtet werden, da die Signalverarbeitung direkt auf die Ansteuerung des Gleichrichters 2 zugreift.

Die Signalübertragung und die Abschaltvorrichtung 14 bewirkt eine Abschaltung der Thyristoren 30, 31 und 32 über die Thyristor-Ansteuerung 18. Sobald alle drei Thyristoren 30, 31 und 32 sperren, wird sich ein Stromfluss über den Vorladezweig 20 der Vorladeschaltung 19 mithin über die Diode 21 und den Widerstand 22 einstellen. Da der Widerstand 22 ein PTC-Glied ist, wird dieser bei großem Stromfluss hochohmig, welcher große Stromfluss im Fehlerfall eines Kurzschlusses des Bremstransistors 13 gegeben ist.

Sobald der Widerstand 22 hochohmig geworden ist, ist der Zwischenkreis 4 vom Versorgungsnetz getrennt.
Es findet somit kein Stromfluss statt, weder über die Thyristoren 30, 31 und 32, noch über die Vorladeschaltung 19 in den Zwischenkreis 4.

**Bezugszeichen**

| | | | |
|---|---|---|---|
| 1 | Frequenzumrichter | 31 | Thyristor |
| 2 | Gleichrichter | 32 | Thyristor |
| 3 | Wechselrichter | 33 | zweite Vergleichseinrichtung |
| 4 | Zwischenkreis | | |
| 5 | Zwischenkreiskondensatoreinheit | | |
| 6 | Zwischenkreiskondensatoreinheit | | |
| 7 | Zwischenkreiskondensator | | |
| 8 | Zwischenkreiskondensator | | |
| 9 | Zwischenkreiskondensator | | |
| 10 | Zwischenkreiskondensator | | |
| 11 | Schutzschaltung | | |
| 12 | Bremswiderstand | | |
| 13 | Bremstransistor | | |
| 14 | Abschaltvorrichtung | | |
| 15 | Thyristoreinheit | | |
| 16 | Thyristoreinheit | | |
| 17 | Thyristoreinheit | | |
| 18 | Thyristor-Ansteuerung | | |
| 19 | Vorladeschaltung | | |
| 20 | Vorladezweig | | |
| 21 | Diode | | |
| 22 | Widerstand | | |
| 23 | Messsignal | | |
| 24 | erste Vergleichseinrichtung | | |
| 25 | Vergleichswert | | |
| 26 | Vergleichssignal | | |
| 27 | Ansteuersignal | | |
| 28 | Steuersignal | | |
| 29 | Signalverarbeitung | | |
| 30 | Thyristor | | |

## Patentansprüche

1. Elektronische Schutzschaltung für einen in Reihe mit einem Bremstransistor (13) geschalteten Bremswiderstand (12) eines Zwischenkreises (4), wobei der Bremstransistor (13) in Abhängigkeit einer am Zwischenkreis (4) anliegenden Spannung mittels eines Ansteuersignals (27) schaltbar ist, mit einer Messeinrichtung, die die am Bremstransistor (13) anliegende Kollektor-Emitter-Spannung misst und ein entsprechendes Messsignal (23) abgibt, mit einer ersten Vergleichseinrichtung (24), die das Messsignal (23) mit einem vorgebbaren Vergleichswert (25) vergleicht und ein entsprechendes Vergleichssignal (26) abgibt, mit einer zweiten Vergleichseinrichtung (33), die das Vergleichssignal (26) mit dem Ansteuersignal (27) für den Bremstransistor (13) vergleicht und bei Ungleichheit ein Steuersignal (28) abgibt, und mit einer Abschaltvorrichtung (14), die bei Detektion eines von der zweiten Vergleichseinrichtung (33) abgegebenes Steuersignals (28) den Stromfluss in dem Zwischenkreis (4) unterbricht, wobei die Abschaltvorrichtung (14) einen Gleichrichter (2) und eine Vorladeschaltung (19) für den Zwischenkreis (4) aufweist, wobei die Vorladeschaltung (19) eine Diode (21) und einen hierzu in Reihe geschalteten, temperaturabhängigen Widerstand (22) aufweist.

2. Schaltung nach Anspruch 1, **dadurch gekennzeichnet, dass** die erste Vergleichseinrichtung (24) einen Optokoppler aufweist.

3. Schaltung nach Anspruch 1, **dadurch gekennzeichnet, dass** der Gleichrichter (2) Thyristoren (30, 31, 32) als Gleichrichterhalbleiter aufweist.

4. Schaltung nach Anspruch 1, 2 oder 3, **dadurch gekennzeichnet, dass** die Vorladeschaltung (19) parallel zum Thyristor (30, 31, 32) an dessen Phase (L1, L2, L3) geschaltet ist.

5. Schaltung nach einem der vorhergehenden Ansprüche 3 bis 4, **dadurch gekennzeichnet, dass** die Abschaltvorrichtung (14) Mittel zur Deaktivierung eines die Thyristoren (30, 31, 32) ansteuernden Signals aufweist.

6. Schaltung nach einem der vorhergehenden Ansprüche, **dadurch gekennzeichnet, dass** der Zwischenkreis (4) zwei in Reihe geschaltete Zwischenkreiskondensatoreinheiten (5, 6) aufweist.

7. Schaltung nach Anspruch 6, **dadurch gekennzeichnet, dass** eine Zwischenkreiskondensatoreinheit (5, 6) mehrere in Reihe und/oder parallel geschaltete Kondensatoren (7, 8, 9, 10) aufweist.

8. Verfahren zum Stromlosschalten eines Zwischenkreises (4) im Kurzschlussfall eines in Reihe mit einem Bremswiderstand (12) geschalteten Bremstransistors (13), der in Abhängigkeit einer am Zwischenkreis (4) anliegenden Spannung mittels eines Ansteuersignals (27) geschaltet wird, bei dem die am Bremstransistor (13) anliegende Kollektor-Emitter-Spannung gemessen, mit einem vorgebbaren Vergleichswert (25) verglichen und ein entsprechendes Vergleichssignal (26) abgegeben wird, bei dem das Vergleichssignal (26) mit dem Ansteuersignal (27) für den Bremstransistor (13) verglichen wird, und bei dem im Falle einer Ungleichheit zwischen Vergleichssignal (26) und Ansteuersignal (27) ein Steuersignal (28) abgegeben und der Stromfluss in den Zwischenkreis (4) unterbrochen wird, bei dem der Strom über Thyristoren (30, 31, 32) in den Zwischenkreis (4) fließt, wobei der Stromfluss in den Zwischenkreis (4) durch Sperrung der Thyristoren (30, 31, 32) unterbrochen wird, bei dem der Strom bei gesperrten Thyristoren (30, 31, 32) über eine Vorladeschaltung (19) mit temperaturabhängigem Widerstand (22) in den Zwischenkreis (4) fließt, wobei der Stromfluss in den Zwischenkreis (4) infolge des Hochohmigwerdens des temperaturabhängigen Widerstands (22) unterbrochen wird.

9. Frequenzumrichter zum Betreiben einer elektrischen Maschine, mit einem Gleichrichter (2) und einem Wechselrichter (3), die miteinander über einen Zwischenkreis (4) verschaltet sind, wobei der Zwischenkreis (4) einen Bremswiderstand (12) und einen in Reihe zum Bremswiderstand (12) geschalteten Bremstransistor (13) aufweist, **gekennzeichnet durch** eine elektronische Schutzschaltung (11) nach einem der vorhergehenden Ansprüche 1 bis 7.

## Claims

1. Electronic protection circuit for a braking resistor (12) of an intermediate circuit (4), which braking resistor is connected in series with a braking transistor (13), the braking transistor (13) being switchable by means of a drive signal (27) as a function of a voltage applied to the intermediate circuit (4), comprising a measuring device which measures the collector-emitter voltage applied to the braking transistor (13) and outputs a corresponding measuring signal (23), a first comparing means (24) which compares the measuring signal (23) with a predeterminable comparison value (25) and outputs a corresponding comparison signal (26), a second comparing means (33) which compares the comparison signal (26) with the drive signal (27) for the braking transistor (13) and outputs a control signal (28) in the event of inequality, and a switch-off device (14) which, when it detects a control signal (28) output by the second comparing means (33), interrupts current flow in the intermediate circuit (4), the switch-off device (14) including a rectifier (2) and a pre-charge circuit (19) for the intermediate circuit (4), the pre-charge circuit (19) having a diode (21) and a temperature-dependent resistor (22) which is connected in series with the diode.

2. Circuit according to claim 1, **characterized in that** the first comparing means (24) has an optocoupler.

3. Circuit according to claim 1, **characterized in that** the rectifier (2) comprises thyristors (30, 31, 32) as rectifier semiconductors.

4. Circuit according to claim 1, 2 or 3, **characterized in that** the pre-charge circuit (19) is connected in parallel with the thyristor (30, 31, 32) to the phase (L1, L2, L3) thereof.

5. Circuit according to any of the preceding claims 3 to 4, **characterized in that** the switch-off device (14) has means for deactivating a signal that drives the thyristors (30, 31, 32).

6. Circuit according to any of the preceding claims, **characterized in that** the intermediate circuit (4) has two series-connected intermediate circuit capacitor units (5, 6).

7. Circuit according to claim 6, **characterized in that** an intermediate circuit capacitor unit (5, 6) has a plurality of capacitors (7, 8, 9, 10) connected in series and/or in parallel.

8. Method for shutting off the power to an intermediate circuit (4) in the event of a short circuit of a braking transistor (13) connected in series with a braking resistor (12), which braking transistor (13) is switched by means of a drive signal (27) as a function of a voltage applied to the intermediate circuit (4), wherein the collector-emitter voltage applied to the braking transistor (13) is measured, compared with a predeterminable comparison value (25) and a corresponding comparison signal (26) is output, wherein the comparison signal (26) is compared with the drive signal (27) for the braking transistor (13) and wherein, in the event of an inequality between the comparison signal (26) and the drive signal (27) a control signal (28) is delivered and the current flow into the intermediate circuit (4) is interrupted, wherein the current flows via thyristors (30, 31, 32) into the intermediate circuit (4), wherein the current flow into the intermediate circuit (4) is interrupted by blocking of the thyristors (30, 31, 32), wherein the current flows into the intermediate circuit (4) via a pre-charge circuit (19) having a temperature-dependent resistor (22) when the thyristors (30, 31, 32) are blocked, the current flow into the intermediate circuit (4) being interrupted as a result of the temperature-dependent resistor (22) becoming high-impedance.

9. Frequency converter for operating an electric machine, comprising a rectifier (2) and an inverter (3) which are interconnected via an intermediate circuit (4), the intermediate circuit (4) including a braking resistor (12) and a braking transistor (13) which is connected in series with the braking resistor (12), **characterized by** an electronic protection circuit (11) according to any of the preceding claims 1 to 7.

## Revendications

1. Circuit de protection électronique pour une résistance de freinage (12) d'un circuit intermédiaire (4) montée en série avec un transistor de freinage (13), le transistor de freinage (13) pouvant être commuté en fonction d'une tension appliquée au circuit intermédiaire (4) au moyen d'un signal de pilotage (27), comprenant un dispositif de mesure, qui mesure la tension collecteur-émetteur appliquée au transistor de freinage (13) et délivre un signal de mesure (23) correspondant, avec un premier dispositif de comparaison (24) qui compare le signal de mesure (23) à une valeur de comparaison (25) pouvant être prédéfinie et délivre un signal de comparaison (26) correspondant, avec un deuxième dispositif de comparaison (33) qui compare le signal de comparaison (26) avec le signal de pilotage (27) pour le transistor de freinage (13) et qui délivre un signal de commande (28) en cas d'inégalité, et avec un dispositif de coupure (14) qui interrompt le flux de courant dans le circuit intermédiaire (4) en cas de détection d'un signal de commande (28) délivré par le deuxième dispositif de comparaison (33), le dispositif de coupure (14) comportant un redresseur (2) et un circuit de précharge (19) pour le circuit intermédiaire (4), le circuit de précharge (19) comportant une diode (21) et une résistance (22) dépendant de la température, montée en série avec celle-ci.

2. Circuit selon la revendication 1, **caractérisé en ce que** le premier dispositif de comparaison (24) comporte un optocoupleur.

3. Circuit selon la revendication 1, **caractérisé en ce que** le redresseur (2) comporte des thyristors (30, 31, 32) comme semi-conducteurs de redressement.

4. Circuit selon la revendication 1, 2 ou 3, **caractérisé en ce que** le circuit de précharge (19) est connecté en parallèle au thyristor (30, 31, 32) sur sa phase (L1, L2, L3).

5. Circuit selon l'une quelconque des revendications 3 à 4 précédentes, **caractérisé en ce que** le dispositif de coupure (14) comporte des moyens de désactivation d'un signal pilotant les thyristors (30, 31, 32).

6. Circuit selon l'une quelconque des revendications précédentes, **caractérisé en ce que** le circuit intermédiaire (4) comprend deux unités de condensateurs de circuit intermédiaire (5, 6) montées en série.

7. Circuit selon la revendication 6, **caractérisé en ce qu'**une unité de condensateur de circuit intermédiaire (5, 6) comprend plusieurs condensateurs (7, 8, 9, 10) montés en série et/ou en parallèle.

8. Procédé de mise hors tension d'un circuit intermédiaire (4) en cas de court-circuit d'un transistor de freinage (13) monté en série avec une résistance de freinage (12), qui est commuté en fonction d'une tension appliquée au circuit intermédiaire (4) au moyen d'un signal de pilotage (27), dans lequel la tension collecteur-émetteur appliquée au transistor de freinage (13) est mesurée, comparée à une valeur de comparaison (25) pouvant être prédéfinie et un signal de comparaison (26) correspondant est délivré, dans lequel le signal de comparaison (26) est comparé au signal de pilotage (27) pour le transistor de freinage (13), et dans lequel, en cas d'inégalité entre le signal de comparaison (26) et le signal de pilotage (27), un signal de commande (28) est délivré et le flux de courant dans le circuit intermédiaire (4) est interrompu, dans lequel le courant passe par des thyristors (30, 31, 32) dans le circuit intermédiaire (4), le flux de courant dans le circuit intermédiaire (4) étant interrompu par blocage des thyristors (30, 31, 32), dans lequel, lorsque les thyristors (30, 31, 32) sont bloqués, le courant circule dans le circuit intermédiaire (4) par l'intermédiaire d'un circuit de précharge (19) comportant une résistance (22) dépendant de la température, le flux de courant dans le circuit intermédiaire (4) étant interrompu à la suite du passage à une valeur ohmique élevée de la résistance (22) dépendant de la température.

9. Convertisseur de fréquence pour faire fonctionner une machine électrique, comprenant un redresseur (2) et un onduleur (3) connectés l'un à l'autre par l'intermédiaire d'un circuit intermédiaire (4), le circuit intermédiaire (4) comprenant une résistance de freinage (12) et un transistor de freinage (13) connecté en série avec la résistance de freinage (12), **caractérisé par** un circuit de protection électronique (11) selon l'une des revendications précédentes 1 à 7.
